# EUROPÄISCHE PATENTSCHRIFT

(11) **EP 2 504 900 B1**
(45) Veröffentlichungstag und Bekanntmachung des Hinweises auf die Patenterteilung: **18.04.2018**
(21) Anmeldenummer: 10788042.9
(22) Anmeldetag: 23.11.2010
(51) Int. Cl.: H02H 7/08, G05B 9/02, G01D 5/244

(54) **SICHERHEITSSCHALTUNGSANORDNUNG UND VERFAHREN ZUM FEHLERSICHEREN ÜBERWACHEN EINER BEWEGUNGSGRÖSSE**
SAFETY SWITCHING DEVICE AND A METHOD FOR SAFE MONITORING OF A MOTION QUANTITY
CIRCUIT DE SÉCURITÉ ET MÉTHODE POUR UNE SURVEILLANCE SÛRE D'UN MOUVEMENT

(30) Priorität: 23.11.2009 DE 102009055991; 30.11.2009 DE 102009057196
(43) Veröffentlichungstag der Anmeldung: 03.10.2012
(73) Patentinhaber: Pilz GmbH & Co. KG, 73760 Ostfildern (DE)
(72) Erfinder: LATURNER, André, 71229 Leonberg (DE)
(74) Vertreter: Witte, Weller & Partner Patentanwälte mbB
(86) Internationale Anmeldenummer: PCT/EP2010/068021
(87) Internationale Veröffentlichungsnummer: WO 2011/061345

(56) Entgegenhaltungen:
- WO-A1-01/11375
- DE-A1- 3 541 852
- DE-A1-102005 030 276
- US-A1- 2008 255 796
- US-A1- 2008 298 784

## Beschreibung

Die vorliegende Erfindung betrifft ein Überwachungsgerät mit einer Sicherheitsschaltungsanordnung zum fehlersicheren Überwachen einer Bewegungsgröße eines beweglichen Maschinenteils, insbesondere zum fehlersicheren Überwachen einer Drehzahl.

Die Erfindung betrifft insbesondere die fehlersichere Überwachung eines Drehzahlgebers zur Absicherung eines Gefahrenbereichs an einer automatisiert arbeitenden Anlage, wie z.B. einer Werkzeugmaschine, eines Roboters, eines Förderbandes oder einer automatisch öffnenden und schließenden Tür. Gefahrenbereiche derartiger Maschinen oder Anlagen werden vielfach durch Schutzzäune, Lichtschranken und andere Einrichtungen abgesichert, so dass ein direkter Zugang in den Gefahrenbereich verhindert ist und/oder die Anlage bei einem Eingriff in den Gefahrenbereich abgeschaltet wird. Jedoch gibt es Fälle, in denen der Zugang zu einem Gefahrenbereich einer Anlage nicht vollständig unterbunden werden kann, wie z.B. beim Einrichten eines automatisierten Arbeitsablaufs an einer Maschine oder einer automatischen Tür. Zur Minimierung des Verletzungsrisikos von Personen ist es bekannt, Bewegungsgrößen der entsprechenden Antriebe, wie z.B. die Drehzahl und/oder das Drehmoment eines Antriebs oder die Geschwindigkeit und/oder die Kraft eines beweglichen Teils einer Anlage, auf einen definierten Maximalwert zu begrenzen. Bspw. kann eine Werkzeugmaschine so bei geöffneter Schutztür mit einer reduzierten, begrenzten Geschwindigkeit betrieben werden. Um die Sicherheit von Personen in diesen Fällen zu gewährleisten, müssen die gefahrbringenden Bewegungsgrößen des arbeitenden Antriebs auf eine fehlersichere Weise überwacht werden.

Fehlersichere Überwachung wird üblicherweise dadurch realisiert, dass die entsprechenden Größen wenigstens zweifach überwacht werden und die jeweiligen Ergebnisse miteinander verglichen werden. Die gefahrbringende Bewegung der Maschine bzw. der Anlage wird in diesem Fall nur zugelassen, wenn und solange die redundanten Messergebnisse der gefährlichen Bewegungsgröße übereinstimmen. Weiterhin wird fehlersichere Überwachung durch voneinander unabhängige Auswertungssysteme erzielt, die eine oder mehrere Überwachungsmessgrößen auswerten.

Aus DE 100 35 783 A1 ist eine Überwachungseinrichtung zum Überwachen einer Drehzahl eines Synchron- oder Asynchronmotors bekannt, wobei die Drehzahl mittels eines Drehzahlsensors erfasst und mit der Solldrehzahl verglichen wird und zusätzlich Antriebsströme der Elektromotoren gemessen und mit zu erwartenden Sollwerten verglichen werden. Der Plausibilitätsvergleich zwischen den gemessenen Drehzahlen und den gemessenen Antriebsströmen ermöglicht die redundante Überwachung der Drehzahl der entsprechenden Synchron- bzw. Asynchronmaschine.

Aus DE 101 63 010 A1 ist eine Schaltung zur fehlersicheren Überwachung einer Geschwindigkeit eines elektrischen Antriebs bekannt, bei der zwei unabhängige Systeme Messgrößen des elektrischen Antriebs überwachen. Die erste Überwachungseinheit führt die Überwachung anhand von geschätzten oder gemessenen Drehzahlwerten durch, wobei die zweite Überwachungseinheit aus Motorstromwerten oder aus rekonstruierten Spannungen eine Messgröße zur Bestimmung der Geschwindigkeit des elektrischen Antriebs ermittelt. Die beiden unabhängigen Überwachungseinheiten sind über eine Kommunikationsleitung miteinander verbunden und führen einen Plausibilitätsabgleich der Überwachungsergebnisse durch.

Aus DE 10 2005 045 284 A1 ist eine Drehzahlüberwachungseinrichtung bekannt, bei der zwei unabhängige Steuereinheiten die Ströme von zwei Motorphasen mit den Spannungen derselben Motorphasen vergleichen. Ferner wird zusätzlich der Summenstrom aller Motorphasen erfasst und aus der Welligkeit des erfassten Signals die Drehzahl ermittelt. Dadurch wird die Detektion von Fehlern in den Überwachungssystemen ermöglicht.

DE 10 2005 030 276 A1 offenbart eine Sicherheitsschaltvorrichtung mit zwei Eingangskreisen, die wahlweise redundant oder separat voneinander verwendet werden können. In einem Ausführungsbeispiel dienen die zwei Eingangskreise zum Aufnehmen eines analogen ersten Signals und eines analogen zweiten Signals, das invertiert zu dem analogen ersten Signal ist. Jeder Eingangskreis besitzt einen Addierer, der dem analogen Eingangssignal analoge Testimpulse überlagert. Das resultierende analoge Kombinationssignal ist einem A/D-Wandler zugeführt. Mit Hilfe des analogen Testsignals kann die Funktion der Sicherheitsschaltvorrichtung überwacht werden.

DE 35 41 852 A1 offenbart ein Überwachungsgerät für Drehzahlgeber entsprechend dem Oberbegriff von Anspruch 1. Der Drehzahlgeber ist einerseits an einen Signalwandler angeschlossen, der das in seiner Frequenz drehzahlproportionale Drehzahlgeberausgangssignal in ein digitales Geschwindigkeitssignal umsetzt und an eine Auswerteeinheit übergibt. Parallel zu dem Signalwandler ist der Drehzahlgeber außerdem an eine Überwachungseinheit angeschlossen. Die Überwachungseinheit prägt einen konstanten Strom durch den Drehzahlgeber ein und überwacht mit Hilfe von zwei Vergleichsschaltungen zwei Potentiale, die sich durch den eingeprägten Strom an den Anschlüssen des Drehgebers ausbilden. Anhand der überwachten Potentiale können Kurzschlüsse des Drehgebers oder seiner Zuleitungen erkannt werden.

Die bekannten Verfahren und Vorrichtungen sind alle recht stark auf die im konkreten Fall zur Verfügung stehenden Messgrößen und Sensoren abgestimmt, die die Bewegung, wie etwa die Drehzahl eines Antriebs repräsentieren. Es gibt allerdings eine große Anzahl von verschiedenen Sensoren, die sehr unterschiedliche Signale liefern können. Beispielsweise gibt es Inkrementaldrehgeber, die zwei verschiedene Rechtecksignale mit jeweils einer Vielzahl von Rechteckpulsen liefern. Aus der Anzahl der Pulse und der Phasenlage der Signale relativ zueinander kann die Drehgeschwindigkeit und die Drehrichtung bestimmt werden. Die Pegel der Signale sind in diesen Fällen häufig TTL-Pegel. Es gibt jedoch auch Inkrementalgeber, die Signale mit HTL-Pegeln liefern, d.h. die Spannungspegel sind wesentlich höher als bei TTL-Signalen. Des weiteren gibt es Drehgeber, die analoge Sinus- und/oder Kosinus-Signale liefern, wie etwa Resolver. Auch hier können die Amplituden abhängig vom verwendeten Sensor variieren. Darüber hinaus gibt es spezielle Sensorschnittstellen, die noch andere Signale verwenden, wie etwa Hiperface®. Bislang muss ein Auswertegerät, das die Signale der Drehgeber auswertet, jeweils in Abhängigkeit vom verwendeten Drehgebertyp ausgewählt und realisiert sein. Es wäre wünschenswert, ein Auswertegerät zu haben, das auf kostengünstige Weise mit einer Vielzahl von unterschiedlichen Sensortypen kombiniert werden kann und das zudem kompakt ist.

Vor diesem Hintergrund ist es eine Aufgabe der vorliegenden Erfindung, eine Vorrichtung der eingangs genannten Art anzugeben, die eine fehlersichere Überwachung einer Bewegungsgröße an einer Anlage für eine Vielzahl von unterschiedlichen Sensoren zum Erfassen der Bewegungsgröße ermöglichen.

Gemäß einem ersten Aspekt der Erfindung wird diese Aufgabe durch ein Überwachungsgerät nach Anspruch 1 gelöst.

Das neue Überwachungsgerät beruht auf der Idee, einem Gebersignal, das der Sicherheitsschaltungsanordnung an einem Eingang zugeführt ist, eine definierte, individuelle Referenzspannung zu überlagern, und zwar vorzugsweise noch vor der eigentlichen Signalauswertung. Vorteilhafterweise ist die Referenzspannung eine Gleichspannung, d.h. dem Gebersignal wird eine Gleichspannung überlagert. Dadurch können Gebersignale mit unterschiedlichen Signalpegeln verarbeitet und auf Plausibilität geprüft werden. Das Gebersignal selbst kann unterschiedliche Signalpegel aufweisen, die durch die Referenzspannung in einen gewünschten Pegelbereich transformiert werden können. Wenn das Gebersignal fehlerfrei vorliegt, weist das Überlagerungssignal, das durch die Summe aus dem Gebersignal und der Referenzspannung gebildet wird, einen bestimmten Signalpegel auf, der sich messtechnisch deutlich von einem fehlerhaften Gebersignal bzw. von einem fehlenden Gebersignal unterscheidet. Der Signalpegel, der von dem Überlagerungssignal erreicht werden muss, unterscheidet sich deutlich von dem Gebersignal alleine, von einem fehlerhaften Gebersignal und von der Referenzspannung. Dadurch ermöglicht die vorliegende Sicherheitsschaltungsanordnung und das Verfahren einen Fehler des angeschlossenen Gebers und einen Fehler bei der Signalübertragung, durch z.B. einen Kabelbruch, sicher zu erkennen und infolgedessen ein Fehlersignal zu generieren und in die Steuerung des Maschinenteils einzugreifen bzw. ggf. die Bewegung des Maschineteils zu unterbrechen.

Durch die Verwendung des Differenzverstärkers können Störungen des Überlagerungssignals, die bspw. durch angeschlossene Bauteile, elektromagnetische Störsignale oder Gleichtaktstörungen entstehen, unterdrückt bzw. gefiltert werden. Das derart entstörte Signal kann dann zuverlässig ausgewertet werden.

Aus diesem Grunde eignet sich das neue Überwachungsgerät besonders gut, eine Bewegungsgröße eines beweglichen Maschinenteils und insbesondere eine Drehzahl, die von einem beliebigen Sensor und insbesondere von einem Drehzahlgeber erfasst wird, anzupassen und auf kostengünstige und fehlersichere Weise zu überwachen.

Die vorliegende Erfindung kann insbesondere dazu dienen, den Diagnosedeckungsgrad gemäß IEC 61508 zu erhöhen. Die oben genannte Aufgabe wird daher vollständig gelöst.

Vorzugsweise weist das Gebersignal einen Wechselsignalanteil auf.

Der Wechselsignalanteil führt zu einer Signaldynamik, die sehr einfach auf potentielle Fehler überwacht werden kann, etwa auf einen Querschluss in der Signalleitung. Der Wechselsignalanteil des Gebersignals kann jedes beliebige Wechselsignal, wie z.B. ein Rechtecksignal, ein Pulssignal oder ein oder mehrere Sinussignale sein. Die Messgröße kann im Sinne der Erfindung in jedem Anteil des Gebersignals übertragen werden, wie z.B. in dem Wechselsignalanteil, in einem Konstant- bzw. Gleichsignalanteil oder in der Beziehung von unterschiedlichen Signalanteilen zueinander.

Der Signalpegelbereich kann vorteilhaft einseitig oder zweiseitig begrenzt sein, also durch einen Maximalpegel oder einen Minimalpegel oder durch einen Maximal- und einen Minimalpegel.

In einer bevorzugten Ausgestaltung ist der Signalpegel oder der Signalpegelbereich durch einen oberen Schwellenwert und einen unteren Schwellenwert bzw. der Signalpegelbereich durch einen oberen Maximalpegel und einen unteren Minimalpegel definiert. Das bedeutet, dass das Überlagerungssignal sowohl den oberen Schwellenwert als auch den unteren Schwellenwert erreichen oder innerhalb des Signalpegelbereichs liegen muss, um einen fehlerfreien Ablauf zu erkennen. Wenn das Gebersignal einen Wechselsignalanteil aufweist, ist durch die beiden Schwellenwerte überprüfbar, ob das Gebersignal einen fehlerfreien Wechselsignalanteil aufweist oder ob es lediglich ein konstantes Signal ist, was z.B. auf einen Fehler des Gebers oder einen Leitungsbruch zurückzuführen wäre. Die Schwellenwerte sind vorzugsweise so eingestellt, dass die positive Flanke des Überlagerungssignals den oberen Schwellenwert erreicht bzw. durchläuft und innerhalb derselben Periode die negative bzw. fallende Flanke des Überlagerungssignals den unteren Schwellenwert erreicht bzw. durchläuft. Sofern das Gebersignal lediglich einen Gleichanteil aufweist, ist durch den Maximalpegel und den Minimalpegel überprüfbar, ob das Überlagerungssignal in dem Signalpegelbereich liegt.

Ferner ist es vorteilhaft, wenn die Messeinrichtung dazu ausgebildet ist, ein Fehlersignal zu generieren, sofern der vordefinierte Signalpegel nicht erreicht wird oder das Überlagerungssignal nicht innerhalb des Signalpegels liegt.

Diese Ausgestaltung ermöglicht auf einfache Weise eine Abschaltung des Antriebs, wenn das überwachte Gebersignal nicht die erwarteten bzw. für ein fehlerfreies Gebersignal üblichen Eigenschaften aufweist.

Vorzugsweise ist die Messeinrichtung dazu ausgebildet, ein Fehlersignal zu generieren, wenn der obere und der untere Schwellenwert nicht wechselweise und vorzugsweise innerhalb einer definierten Periode des Wechselsignalanteils erreicht werden.

Dadurch kann zuverlässig überprüft werden, ob ein fehlerfreies Gebersignal anliegt, ob es eine korrekte Amplitude aufweist und insbesondere kann ein Fehler des Gebers und ein damit verbundener "stuck-at-high"- oder ein "stuck-at-low"-Fehler sicher erkannt werden.

Dabei ist es bevorzugt, wenn das generierte Fehlersignal dazu ausgebildet ist, die Bewegungsgröße des Maschinenteils zu beeinflussen. Dadurch ist es möglich, bei jedem erkannten Fehler in die Bewegung des gefahrbringenden Maschinenteils einzugreifen und die notwendige Sicherheit zu gewährleisten.

Ferner ist es bevorzugt, wenn die Messeinrichtung einen Analogkomparator aufweist.

Mit einem Analogkomparator können die Schwellenwerte, insbesondere Schwellenspannungen, mit geringem Aufwand, z.B. durch Bereitstellung von Vergleichsspannungen, die vorzugsweise an den Analogkomparator angelegt werden, eingestellt werden und das Erreichen einer der Schwellenwerte kann dadurch mit einem einfachen Komparatorausgangssignal sehr schnell erfasst und geprüft werden.

Ferner ist es bevorzugt, wenn die Schwellenwerte jeweils durch wenigstens einen Analogkomparator überwacht sind. Dadurch können die Schwellenwerte unabhängig voneinander eingestellt werden und die Signale der Komparatoren unabhängig voneinander ausgewertet werden.

Weiterhin ist es vorteilhaft, wenn die Messeinrichtung wenigstens eine Analog-Digital-Wandler-Einrichtung aufweist. Dadurch kann das Überlagerungssignal von einer digitalen Auswerteeinheit geprüft werden.

Weiterhin ist es bevorzugt, wenn das Gebersignal ein weitgehend pulsartiges Signal ist.

Dadurch können auch TTL-Geber, HTL oder Initiatoren zur Messung der Bewegungsgröße verwendet werden.

Alternativ ist das Gebersignal ein weitgehend sinusförmiges Signal.

Dadurch können auch sin/cos-Geber von der Sicherheitsschaltungsanordnung fehlersicher überwacht werden.

Bei der Sicherheitsschaltungsanordnung ist es bevorzugt, wenn die Referenzspannung und/oder wenigstens einer der Schwellenwerte oder der Signalpegelbereich mittels einer Steuereinheit automatisch einstellbar ist.

Dadurch lässt sich jeder beliebige Geber an die Sicherheitsschaltungsanordnung anschließen, ohne dass ein weiterer Eingriff in die Schaltungssteuerung nötig ist. Dadurch können ferner menschliche Fehler beim Einrichten der Schaltungsanordnung ausgeschlossen werden.

Weiterhin ist es bevorzugt, wenn die Referenzspannung und/oder wenigstens einer der Schwellenwerte oder der Signalpegelbereich manuell einstellbar ist.

Dadurch können individuelle Anforderungen beispielsweise in Bezug auf die Empfindlichkeit oder die Reaktionsgeschwindigkeit der Sicherheitsschaltanordnung für jeden Geber individuell eingestellt werden.

In einer bevorzugten Ausgestaltung weist die Auswerteeinheit eine Quadraturauswertung auf.

In dieser Ausgestaltung werden vorzugsweise Ausgangssignale von unterschiedlichen Differenzverstärkern, denen die verschiedenen Gebersignale zugeführt werden, von einer Quadraturauswertungsschaltung ausgewertet. Der besondere Vorteil an dieser Auswertungsmethode ist es, dass sie mit einer hohen Präzision ausgeführt werden kann, höhere Drehzahlen gemessen werden können und eine Drehrichtungserkennung möglich ist. Durch diese Quadraturauswertungsschaltung kann das analoge Signal, das die Bewegungsgröße repräsentiert, einfach und zuverlässig ausgewertet werden.

In einer weiteren Ausgestaltung ist die Quadraturauswertungsschaltung mit dem Ausgang des Differenzverstärkers und mit wenigstens einer zweiten Sicherheitsschaltungsanordnung verbunden, der ein weiteres Gebersignal zugeführt wird.

In einer bevorzugten Ausgestaltung weist die Auswerteeinheit zwei zueinander redundante Kanäle auf, die mit dem Ausgang des Differenzverstärkers verbunden sind.

In dieser Ausgestaltung ist eine zuverlässige Auswertung des Gebersignals möglich, weil eine weitere redundante Auswertungsschaltung verwendet wird. Damit trägt diese Redundanz zu einer weiterhin erhöhten Fehlersicherheit der neuen Sicherheitsschaltungsanordnung und des neuen Verfahrens bei.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein erstes Ausführungsbeispiel einer Sicherheitsschaltungsanordnung zur fehlersicheren Überwachung eines Gebersignals;
- Fig. 2: eine Variante der Sicherheitsschaltungsanordnung gemäß Fig. 1;
- Fig. 3: eine vereinfachte Darstellung eines Überwachungsgerätes, in dem mehrere Sicherheitsschaltungsanordnungen gemäß Fig. 1 oder FiIg. 2 zur Anwendung kommen, und
- Fig. 4: eine vereinfachte Darstellung einer Anlage mit einem Überwachungsgerät gemäß Fig. 3.

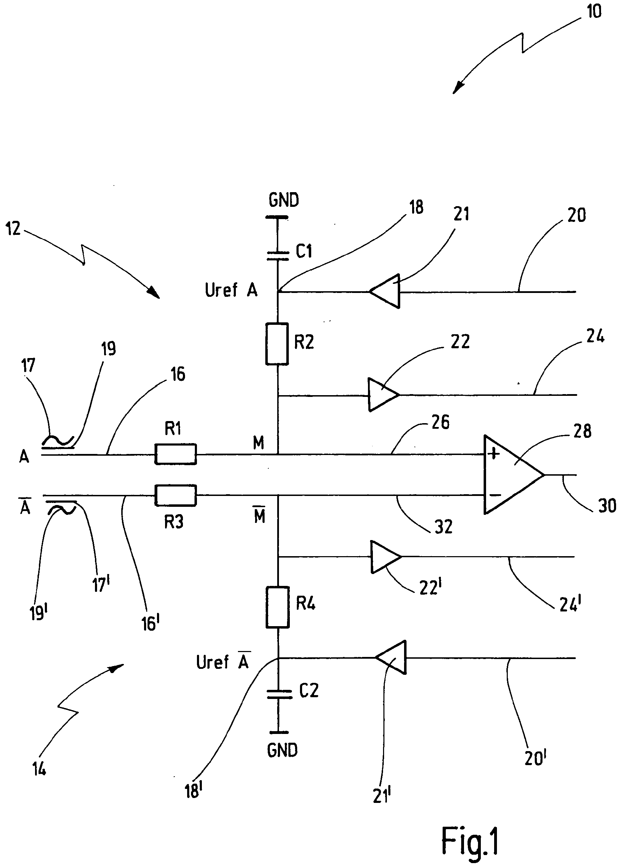

In Fig. 1 ist eine Sicherheitsschaltungsanordnung allgemein mit der Bezugsziffer 10 bezeichnet.

Die Sicherheitsschaltungsanordnung 10 weist eine erste Sicherheitsschaltung 12 und eine zweite Sicherheitsschaltung 14 auf. Die Sicherheitsschaltungen 12, 14 sind in diesem bevorzugten Fall identisch aufgebaut. Die Sicherheitsschaltung 12 weist eine Eingangssignalleitung 16 auf, über die der Sicherheitsschaltung 12 ein Gebersignal A zugeführt wird. Das Gebersignal A weist vorzugsweise einen Wechselsignalanteil 17 auf, der für eine Bewegung repräsentativ ist, etwa eine Drehbewegung einer Welle. Das Gebersignal A kann jedoch auch lediglich einen Gleichanteil 19 aufweisen, dessen Pegelhöhe beispielsweise für die Bewegung repräsentativ ist. Das Gebersignal A kann ferner ein Mischsignal aus Wechselsignalanteil 17 und Gleichanteil 19 sein. Die Eingangssignalleitung 16 ist hier über einen Widerstand R1 mit einem Abgriff M verbunden. Der Abgriff M ist über einen Widerstand R2 mit einem Referenzspannungspunkt 18 verbunden. An dem Referenzspannungspunkt 18 liegt eine Referenzspannung UrefA an. Der Referenzspannungspunkt 18 ist über einen Kondensator C1 auf einen Massepunkt GND geführt. Die Referenzspannung UrefA wird dem Referenzspannungspunkt 18 über einen Referenzspannungspfad 20 zugeführt. Der Referenzspannungspfad 20 weist hier eine Versorgungseinheit auf, die die Referenzspannung UrefA erzeugt. Die Versorgungseinheit 21 beinhaltet in diesem Fall einen Operationsverstärker 21, der die Referenzspannung UrefA aus einem dem Operationsverstärker zugeführten, pulsweitenmodulierten Signal mittelt. Das pulsweitenmodulierte Signal besitzt beispielsweise ein Tastverhältnis, das hier von 0 % - 100 % einstellbar ist. Das pulsweitenmodulierte Signal wird vorzugsweise von einer Auswerte- und Steuereinheit eines Überwachungsgerätes, in dem die Sicherheitsschaltungsanordnung 10 untergebracht ist erzeugt, oder über eine Klemme von außen zu dem Operationsverstärker 21 zugeführt. Alternativ zu dem Operationsverstärker 21 kann die Versorgungseinheit einen Digital-Analog-Wandler aufweisen, der die Referenzspannung erzeugt. Der Abgriff M ist hier mit einer Messeinrichtung 22 verbunden. Die Messeinrichtung 22 weist hier einen Analogkomparator auf. Alternativ oder zusätzlich kann die Messeinrichtung 22 einen Analog-Digital-Wandler aufweisen. Die Messeinrichtung 22 weist eine Ausgangsleitung 24 auf, um ein Fehlersignal zu einer Auswerte- und Steuereinheit zu führen. Der Abgriff M ist mit einem ersten Eingang 26 eines Differenzverstärkers 28 verbunden. Der Differenzverstärker 28 weist eine Signalausgangsleitung 30 auf, um ein Differenzverstärkersignal aus der Sicherheitsschaltungsanordnung 10 herauszuführen.

Die Sicherheitsschaltung 14 ist in gleicher Weise aufgebaut wie die Sicherheitsschaltung 12. Die Sicherheitsschaltung 14 weist eine Eingangssignalleitung 16' auf, die über einen Widerstand R3 auf einen Abgriff M̅ geführt ist. Der Abgriff M̅ ist über einen Widerstand R4 auf eine Referenzspannungsklemme 18' geführt. An den Referenzspannungspunkt 18' liegt eine Referenzspannung Uref A̅ an. Der Referenzspannungspunkt 18' ist mit einer Referenzspannungsleitung 20' verbunden, über die die Referenzspannung Uref A̅ an den Referenzspannungspunkt 18' angelegt wird. Die Referenzspannungsleitung 20' weist die Versorgungseinheit 21' auf. Der Referenzspannungspunkt 18' ist über einen Kondensator C2 auf den Massepunkt GND geführt. Der Abgriff M̅ ist mit einer Messeinrichtung 22' verbunden, die vorzugsweise einen Analogkomparator 22' aufweist. Die Messeinrichtung 22' ist mit einer Ausgangssignalleitung 24' verbunden, um ein Prüfsignal aus der Sicherheitsschaltungsanordnung herauszuführen. Der Abgriff M̅ ist mit einem zweiten Differenzverstärkereingang 32 des Differenzverstärkers 28 verbunden. In bevorzugten Ausführungsbeispielen können die Referenzspannungen UrefA und Uref A̅ getrennt voneinander eingestellt werden.

Die Eingangssignalleitung 16 dient dazu, der Sicherheitsschaltung ein erstes Gebersignal A von einem Drehgeber oder einem anderen Bewegungssensor zuzuführen. Die Eingangssignalleitung 16' dient hier dazu, der Sicherheitsschaltung 14 ein zweites Gebersignal A̅ zuzuführen, das gegenüber dem Gebersignal A invertiert sein kann. Dementsprechend weist das Gebersignal A̅ einen Wechselsignalanteil 17' auf. Alternativ weist das Gebersignal A̅ lediglich einen Gleichanteil 19' auf. Das Gebersignal A̅ kann auch +als Mischsignal aus Wechselsignalanteil 17' und Gleichanteil 19' gebildet sein. Die Gebersignale A, A̅ sind vorzugsweise zwei Ausgangssignale eines Gebers, der die Bewegungsgröße erfasst. Der Geber stellt also das Gebersignal A und beispielsweise das invertierte Gebersignal A̅ bereit, wobei das invertierte Gebersignal A̅ 180° phasenverschoben ist zu dem Gebersignal A. Alternativ kann der Sicherheitsschaltungsanordnung 10 statt des invertierten Gebersignals A̅ eine Gleichspannung oder gar kein zweites Gebersignal zugeführt werden.

Das Gebersignal A an der Eingangssignalleitung 16 wird über den Widerstand R1 auf den Abgriff M geführt. Über den Widerstand R2 wird am Abgriff M die Referenzspannung UrefA eingespeist. Da das Gebersignal A über die Widerstände R1 und R2, die einen Spannungsteiler bilden, auf die Referenzspannung UrefA geführt ist, wird die Referenzspannung UrefA dem Gebersignal A überlagert. Das Überlagerungssignal weist den Wechselsignalanteil 17 und/oder den Gleichanteil 19 sowie den Pegel der Referenzspannung UrefA auf. Das so gebildete Überlagerungssignal ist am Abgriff M abgreifbar.

Die Messeinrichtung 22 ist mit dem Abgriff M verbunden, um das Überlagerungssignal in Bezug auf die analogen Signalwerte und insbesondere dahingehend zu überwachen, ob die analogen Signalwerte innerhalb definierter Signalbereiche liegen und/oder ein definiertes Signalverhalten aufweisen. Damit dient die Messeinrichtung 22 zur Fehlerprüfung. Dadurch, dass die Referenzspannung UrefA dem Gebersignal A am Abgriff M überlagert wird, können unterschiedlich Gebersignalpegel an die Sicherheitsschaltung 12 bzw. an die Messeinrichtung 22 und den Differenzverstärker 28 angepasst werden. Dadurch ist die Überprüfung unterschiedlicher Gebertypen an dem einen Signaleingang 16 bzw. 16/16' möglich. Die Messeinrichtung 22 ist hier insbesondere dazu ausgebildet, zu überprüfen, ob das Überlagerungssignal tatsächlich einen Wechselsignalanteil 17 aufweist und, wenn ja, ob das Überlagerungssignal einen oberen Schwellenwert und einen unteren Schwellenwert erreicht. Die Schwellenwerte sind so eingestellt, dass der obere Schwellenwert unterhalb der maximal zu erwartenden Amplitude des Überlagerungssignals liegt und der untere Schwellenwert oberhalb der minimal zu erwartenden Amplitude des Überlagerungssignals liegt. Bei einem fehlerfreien Überlagerungssignal erreicht eine steigende Flanke des Überlagerungssignals den oberen Schwellenwert und innerhalb derselben Periode des Signals erreicht eine fallende Flanke des Überlagerungssignals den unteren Schwellenwert. Es wird vorzugsweise geprüft, ob die Schwellenwerte abwechselnd erreicht werden, um eine erhöhte Fehlerdetektion zu erreichen. Wenn das Gebersignal A lediglich den Gleichanteil 19 besitzt, überprüft die Messeinrichtung 22, ob das Überlagerungssignal innerhalb eines vordefinierten Wertebereichs liegt. Wenn ein Kabelbruch an der Verbindungsleitung zwischen Eingang 16 und Geber vorliegt, misst die Messeinrichtung 22 am Abgriff M lediglich die Referenzspannung UrefA. Diese Referenzspannung UrefA ist vorzugsweise so gewählt, dass sie durch eine einfache Analogmessung ausgewertet werden kann und sich insbesondere von den anderen Spannungen in der Sicherheitsschaltungsanordnung deutlich unterscheidet. Somit kann ein Kabelbruch an dem Eingangssignal 16 sowohl bei Wechselsignalen als auch bei Gleichsignalen des Gebers erkannt werden.

Ferner sind bei einem Fehler des Gebers grundsätzlich zwei Spannungszustände denkbar. Zum einen kann der Geber eine konstant hohe Spannung liefern, die dem Maximalwert des Gebersignals A entspricht (stuck-at-high), oder zum anderen eine konstant niedrige Spannung, die dem Minimalwert des Gebersignals A entspricht und im Falle eines TTL-Gebers beispielsweise etwa 0 Volt ist (stuck-at-low). Folglich wird das Überlagerungssignal bei einem stuck-at-high-Fehler des Gebers genau ein Mal den oberen Schwellenwert und im Falle eines stuck-at-low-Fehlers des Gebers genau ein Mal den unteren Schwellenwert erreichen und danach konstant bleiben. Sofern das Gebersignal A lediglich den Gleichanteil 19 aufweist, liegt das Überlagerungssignal in diesen beiden Fällen außerhalb des vordefinierten Bereichs und kann als Fehler erkannt werden. Folglich sind alle möglichen Fehlervarianten von der Messeinrichtung 22 detektierbar.

Vorzugsweise weist die Messeinrichtung 22 einen Analogkomparator auf, um die Pegelwerte des Überlagerungssignals zu überwachen. Die Schwellenspannung des Analogkomparators kann vorteilhaft variiert werden und von einer Auswerte- und Steuereinheit insbesondere automatisch an die Signalpegel des Gebersignals angepasst werden. Abhängig von dem Pegelwert des Überlagerungssignals erzeugt der Analogkomparator 22 (bzw. der Analogkomparator 22') ein Fehlersignal auf einer Ausgangsleitung 24 (bzw. 24'), wenn innerhalb eines definierten Zeitraums keiner der Schwellenwerte von dem Überlagerungssignal erreicht wird. Alternativ oder ergänzend kann die Messeinrichtung 22 einen Analog-Digital-Wandler aufweisen, um die Pegelwerte des Überlagerungssignals zu bestimmen, wobei in diesen Fällen der Analog-Digital-Wandler und eine nachgeschaltete Vergleichseinheit das Fehlersignal erzeugt.

UrefA und Uref A̅ werden vorzugsweise so eingestellt, dass sich die Wechselanteile 17 der beiden resultierenden Überlagerungssignale überschneiden. Ferner sind die Abgriffe M, M̅ mit den Differenzverstärkereingängen 26, 32 verbunden. Der Differenzverstärker 28 liefert ein Differenzverstärkerausgangssignal über die Ausgangssignalleitung 30. Das Differenzverstärkerausgangssignal ist ein Rechtecksignal (Pulsfolge mit Rechteckpulsen), das hier beispielsweise positiv ist für den Fall, dass das Gebersignal A größer ist als das invertierte Gebersignal A̅. Anderenfalls ist das Differenzverstärkerausgangssignal negativ. Durch den Differenzverstärker 28 können die Gebersignale A, A̅ entstört werden und von einer nachfolgend beschriebenen Auswertungseinheit, die an der Ausgangssignalleitung 30 angeschlossen ist, ausgewertet werden. Die Auswerteeinheit kann vorteilhaft einen Quadraturdekoder, einen Frequenzzähler und/oder einen Impulsbreitenzähler aufweisen, um anhand der Signalwechsel des Rechtecksignals die Bewegungsgröße, wie etwa die Drehzahl und/oder Position einer Welle, zu bestimmen.

Durch die Messeinrichtungen 22, 22', die in den Sicherheitsschaltungen 12, 14 vorgesehen sind, sind die Eingänge 16, 16' und die damit verbundenen Ausgangssignalleitungen des angeschlossenen Gebers separat prüfbar.

Dadurch, dass das Überlagerungssignal auf das Erreichen eines oberen Schwellenwerts, auf das Erreichen eines unteren Schwellenwerts geprüft wird und/oder darauf geprüft wird, ob es innerhalb eines vordefinierten Signalpegelbereichs liegt, ist die Überwachung von unterschiedlichen Gebersignalen, wie z.B. sinusförmigen Signalen, pulsförmigen Signalen, Rechtecksignalen, Mischsignalen, die aus einem Gleichanteil und einem Wechselanteil gebildet sind und reinen Gleichsignalen, die lediglich einen Gleichanteil aufweisen, möglich.

Zur Steigerung der elektromagnetischen Verträglichkeit der Sicherheitsschaltungen 12, 14 sind die Abgriffe M, M vorzugsweise über eine Reihenschaltung einer nicht dargestellten Diode mit einer nicht dargestellten Z-Diode auf den Massepunkt GND geführt. Diese Reihenschaltung führt zu einer sehr geringen Kapazität, die sich besonders vorteilhaft bei hohen Grenzfrequenzen auswirkt.

Zur weiteren Steigerung der elektromagnetischen Verträglichkeit kann zwischen den Abgriffen M, M und den Differenzverstärkereingängen 26, 32 vorzugsweise jeweils ein Widerstand geschaltet sein. Ferner kann jeder der Differenzverstärkereingänge 26, 32 über einen nicht dargestellten Transistor und einen schaltbaren Widerstand auf den Massepunkt GND zur Bereichsumschaltung geführt sein. Dadurch wird der Einsatz von Operationsverstärkern mit geringeren Maximalspannungen insbesondere von 3,3 Volt Operationsverstärkern ermöglicht.

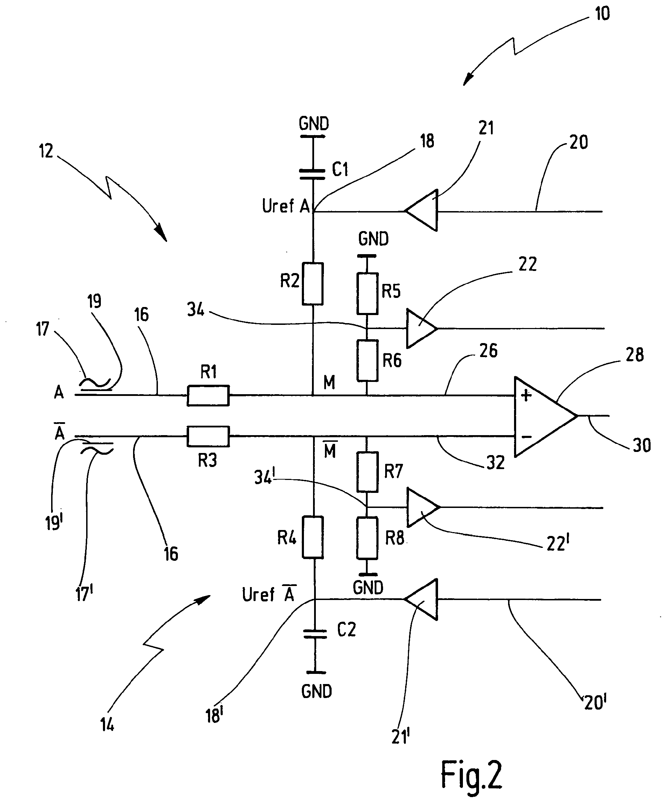

In Fig. 2 ist eine Variante der Sicherheitsschaltungsanordnung 10 dargestellt. Gleiche Elemente sind mit gleichen Bezugsziffern bezeichnet, wobei im Folgenden lediglich auf die Unterschiede eingegangen wird.

Der Abgriff M der Sicherheitsschaltung 12 ist über eine Reihenschaltung eines Widerstands R6 und eines Widerstands R5 auf den Massepunkt GND geführt. Die Messeinrichtung 22 ist mit einem Abgriff 34 verbunden, der sich zwischen dem Widerstand R6 und dem Widerstand R5 befindet. Das Gebersignal A ist folglich über einen Spannungsteiler aus R1 mit den Widerständen R5 und R6 auf den Massepunkt GND geführt. Durch diesen Spannungsteiler ist eine weitere Anpassung unterschiedlicher Gebersignale A an die Messeinrichtung 22 möglich.

Die Sicherheitsschaltung 14 ist mit der Sicherheitsschaltung 12 identisch aufgebaut und weist in der in Fig. 2 dargestellten Ausführungsform ebenfalls einen Spannungsteiler auf, der gebildet ist durch den Widerstand R3 mit Widerständen R7 und R8 gegen den Massepunkt GND. Zwischen den Widerständen R7 und R8 ist ein Abgriff bzw. ein Spannungspunkt 34' gebildet, mit dem die Messeinrichtung 22' verbunden ist. Die Widerstände R2 und R4 der zuvor genannten Ausführungsformen sind vorzugsweise hochohmig ausgebildet.

Zur weiteren Erhöhung der Sicherheit kann neben dem Differenzverstärker 28 ein weiterer Differenzverstärker vorgesehen sein, der wie der Differenzverstärker 28 mit den Differenzverstärkereingängen 26, 32 verbunden ist. Eine Ausgangssignalleitung des zusätzlichen Differenzverstärkers ist mit einer weiteren Auswerteeinheit verbunden, um zusätzliche Sicherheit zu gewährleisten.

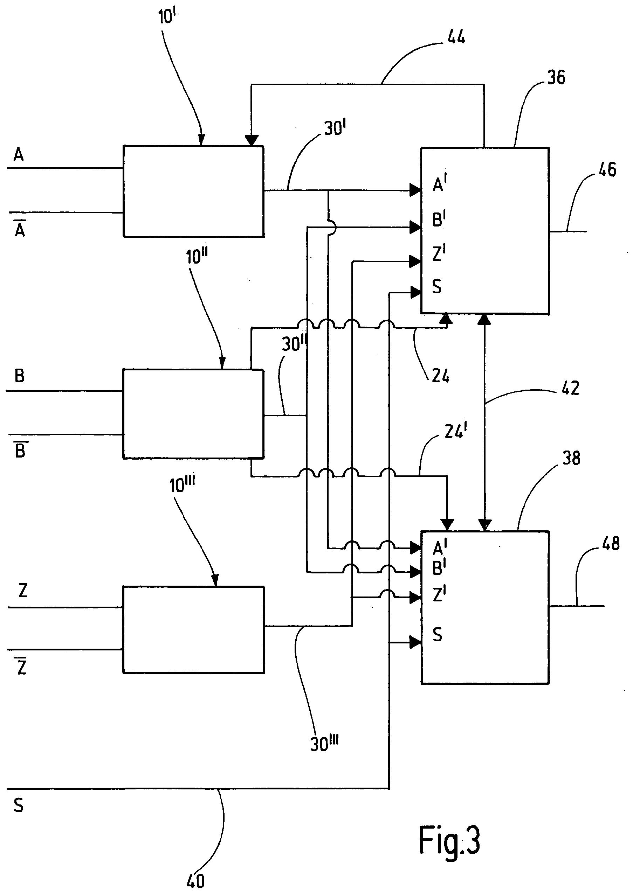

In Fig. 3 ist ein Überwachungsgerät mit mehreren Sicherheitsschaltungsanordnungen 10 zur fehlersicheren Auswertung von mehreren Gebersignalen dargestellt. Das Überwachungsgerät weist hier drei Sicherheitsschaltungsanordnungen 10 auf und ist insgesamt mit der Bezugsziffer 29 bezeichnet. Der ersten Sicherheitsschaltungsanordnung 10' sind das Gebersignal A und, sofern vorhanden, das Gebersignal A̅ zugeführt. Der zweiten der Sicherheitsschaltungsanordnungen 10" ist ein Gebersignal B und, sofern vorhanden, ein weiteres Gebersignal B̅ zugeführt. Der dritten der Sicherheitsschaltungsanordnungen 10''' ist ein Gebersignal Z und, sofern vorhanden, ein weiteres Gebersignal Z̅ zugeführt. Die Ausgangssignalleitungen 30', 30", 30''' der Sicherheitsschaltungsanordnungen 10', 10", 10''' sind jeweils mit einer ersten Auswertungsschaltung 36 und einer zweiten Auswertungsschaltung 38 verbunden. Das Gebersignal B ist hier ein Gebersignal, das um 90° phasenverschoben ist zu dem Gebersignal A. Vorzugsweise wird das Gebersignal B von demselben Geber bereitgestellt wie das Gebersignal A. In einigen Fällen sind die Gebersignale A und B (sowie ggf. die invertierten Gebersignale A̅, B̅) zwei sogenannte Spuren eines Inkrementalgebers. Die Gebersignale A, B können jedoch auch von einem Resolver oder auch von verschiedenen Gebern stammen.

Das invertierte Gebersignal B̅ ist vorzugsweise 180° phasenverschoben zu dem Gebersignal B und wird von demselben Geber bereitgestellt wie das Gebersignal B. Das Gebersignal Z kann ebenfalls von demselben Geber bereitgestellt sein wie die Gebersignale A und B. beispielsweise kann das Gebersignale Z ein Indexsignal sein, das einen Referenzpunkt an einer überwachten Welle repräsentiert, so dass mit Hilfe des Gebersignals Z eine Referenzposition der Welle erkannt werden kann.

In anderen Fällen wird das Gebersignal Z von einem separaten Geber bereitgestellt, der die Bewegungsgröße räumlich entfernt von dem ersten Geber erfasst. Z.B. ist es vorteilhaft, wenn der erste Geber, der die Signale A, B und ggf. A̅, B̅ liefert, an einem ersten Ende einer rotierenden Welle angeordnet ist, während der zweite Geber für das Z-Signal an einem zweiten Ende der Welle angeordnet ist. So kann mittels der Gebersignal der beiden Geber ein Wellenbruch oder dergleichen festgestellt werden.

Den Auswertungsschaltungen 36, 38 ist das Ausgangssignal A' der ersten Sicherheitsschaltungsanordnung 10' und das Ausgangssignal B' der zweiten Sicherheitsschaltungsanordnung 10" zugeführt, um die zu messende Bewegungsgröße zu bestimmen, und zwar vorteilhaft mittels Quadraturauswertung, Frequenzauswertung und/oder Impulsdauerauswertung. Dabei sind die Ausgangssignale A', B' vorteilhafterweise die Ausgangssignale von den Differenzverstärkern 28 der Sicherheitsschaltungsanordnungen 10' und 10".

Von den Messeinrichtungen 22, 22' jeder Sicherheitsschaltungsanordnungen 10', 10", 10''' erhalten die Auswertungsschaltungen 36, 38 in bevorzugten Ausführungsbeispielen außerdem die Fehlersignale. Die Ausgangsleitungen 24, 24' der Schaltungsanordnungen 10', 10", 10''' können daher mit den Auswertungsschaltungen 36, 38 verbunden sein. Diese Verbindung ist in Fig. 3 lediglich beispielhaft für die Sicherheitsschaltung 10" gezeigt.

Das Ausgangssignal der dritten Sicherheitsschaltungsanordnung 10''' ist den Auswertungsschaltungen 36, 38 zugeführt und dient vorteilhaft entweder als Index oder zur Wellenbrucherkennung. Vorzugsweise liefert das Ausgangssignal der dritten Sicherheitsschaltungsanordnung 10''' einen oder wenigstens einen Impuls pro Umdrehung der überwachten Welle.

Ferner weist Überwachungsgerät 29 hier noch eine sogenannte S-Spur 40 auf, über die ein zusätzliches Analogsignal an die Auswertungsschaltungen 36, 38 geführt werden kann, um eine zusätzliche Messgröße zu erfassen. In bevorzugten Fällen ist die S-Spur an die Betriebsspannungsleitung der verwendeten Geber angeschlossen, so dass die Auswertungsschaltungen 36, 38 die Betriebsspannung der verwendeten Geber überwachen können, um einen zusätzlichen Sicherheitsaspekt zu bieten.

Die Auswertungsschaltungen 36, 38 sind über eine Kommunikationsleitung 42 miteinander verbunden, um einen Plausibilitätsvergleich durchzuführen. Die Auswertungsschaltungen weisen Ausgangssignalleitung 46, 48 auf, um die ausgewertete Bewegungsgröße und/oder Steuersignale nach außen zu führen. Die Kommunikationsleitung 42 kann zweikanalig ausgebildet sein und beispielsweise durch zwei galvanisch getrennte Busse und/oder zwei Abschaltpfade für die überwachte Welle realisiert sein.

Bei der Quadraturauswertung werden zwei Rechtecksignale A', B', die an der Ausgangssignalleitung 30' der ersten Sicherheitsschaltungsanordnung 10' und der Ausgangssignalleitung 30" der zweiten Sicherheitsschaltungsanordnung 10" anliegen, miteinander verglichen. Die Ausgangssignale sind Rechtecksignale, die durch die Phasenverschiebung der entsprechenden Gebersignale A, B ebenfalls 90° phasenverschoben sind. Bei der Quadraturauswertung wird bei jeder detektierten Flanke eines der beiden Signale A', B' die Polarität des jeweils anderen Signals und der Betrag des jeweiligen anderen Signals geprüft. Aus diesen Informationen lassen sich acht verschiedene Zustände bzw. Bereiche ermitteln, und zwar für einen Rechtslauf der Welle, dass A' steigend und B' low, A' fallend und B' high, B' steigend und A' high oder B' fallend und A' low, und für einen Linkslauf der Welle, dass A' steigend und B' high, A' fallend und B' low, B' steigend und A' low oder B' fallend und A' high. Über den Abstand der Signale lässt sich eine Positionsbestimmung der Welle ableiten.Durch die Quadraturauswertung von zwei phasenverschobenen Gebersignalen A, B lässt sich eine vierfache Auflösung der Drehzahlmessung erzielen.

In einer besonderes Ausführungsform weisen die Sicherheitsschaltungsanordnungen 10', 10", 10''' zwei zueinander redundante Differenzverstärker 28 auf, deren Differenzverstärkereingang 26 jeweils mit dem Abgriff M und deren Differenzverstärkereingang 32 jeweils mit dem Abgriff M̅ verbunden ist. Die Ausgangssignalleitung 30 des ersten Differenzverstärkers 28 ist mit der Auswerteschaltung 36 und die Ausgangssignalleitung 30 des zweiten Differenzverstärkers 28 ist mit der Auswerteschaltung 38 verbunden. Dadurch kann eine zusätzliche Ausfallsicherheit gewährleistet werden.

Die Auswertungsschaltungen 36, 38 sind vorzugsweise durch Mikrocontroller oder durch andere Logikschaltungen realisiert, die ihre Auswertungsergebnisse miteinander vergleichen. Dieser Vergleich erfolgt über die Kommunikationsleitung 42. Die Kommunikationsleitung 42 kann als bidirektionale Schnittstelle, als Busverbindung und/oder als Dual-Ported RAM ausgebildet sein. Ferner können diese Auswertungsschaltungen 36, 38 dazu ausgebildet sein, die Referenzspannungen UrefA, Uref A̅ der ersten Sicherheitsschaltungsanordnung 10' und die entsprechenden Referenzspannungen der zweiten und dritten Sicherheitsschaltungsanordnungen 10", 10''' einzustellen, um eine automatische Anpassung der Sicherheitsschaltungsanordnungen 10', 10", 10''' an einen entsprechenden Geber zu ermöglichen. In bevorzugten Fällen stellen die Auswertungsschaltungen 36, 38 die Referenzspannungen in Abhängigkeit von den Pegelwerten der Gebersignale ein. Dies ist beispielhaft durch eine Leitung 44 angedeutet. Die Widerstände R1 bis R8 können durch die Mikrocontroller einstellbar sein, um eine genaue automatische Anpassung an verschiedene Gebersignale zu ermöglichen.

Mit der Sicherheitsschaltungsanordnung 10 wird ein universeller Geberanschluss für das Überwachungsgerät 29 bereitgestellt, der einen Anschluss von TTL-Gebern, HTL-Gebern, sin/cos-Gebern, Tacho- oder Doppeltachogebern, Resolvern und auch den Anschluss von Analogspuren von Hyperface® oder EnDat-Gebern ermöglicht. Dabei können auch Geber angeschlossen werden, die kein invertiertes Gebersignal A̅, B̅ bereitstellen, wie z.B. Initiatorgeber. Anstatt des invertierten Signals A̅ kann in diesem Fall eine Gleichspannung an den Differenzverstärkereingang 32 angelegt bzw. eingestellt werden und zwar vorzugsweise auf einen Mittelwert des Signals am Abgriff M. In diesem Fall kann dieses Gebersignal A̅ individuell über die Referenzspannung Uref A̅ angepasst werden. Es versteht sich, dass in diesem Falle die Sicherheitsschaltung 14 entsprechend angepasst werden muss, um kein Fehlersignal mangels detektierter Wechselgröße zu erzeugen.

Die Sicherheitsschaltungsanordnung 10 kann in einigen Ausführungsbeispielen als Stand-alone Gerät nach Art eines Steckverbinders ausgebildet sein. Das bedeutet, dass die entsprechenden Geber über Eingangsklemmen mit der Sicherheitsschaltungsanordnung 10 verbindbar sind und die Ausgangsleitungen 24, 24' sowie die Ausgangssignalleitung 30 an Ausgangsklemmen aus dem Verbinder herausgeführt werden. Ferner können die Referenzspannungen UrefA, Uref A̅ dem Verbinder an weiteren Eingangsklemmen zugeführt werden.

In anderen Ausführungsbeispielen kann ein kompletter Drehzahl- und Stillstandswächter als Überwachungsgerät 29 bereitgestellt werden, wie er in Fig. 3 dargestellt ist. Dabei weist dieses Gerät ein Gerätegehäuse mit Klemmen für die Gebersignale A, A̅, B, B̅, Z, Z̅ und S auf und gibt die gemessene Drehzahl bzw. Bewegungsgröße und ein eventuelles Fehlersignal aus. Das bedeutet, dass die Sicherheitsschaltungen 10', 10", 10''' und die Auswerteeinheiten 36, 38 in dem Gerätegehäuse integriert sind. Dadurch wird eine besonders einfache Integration dieses Drehzahl- und Stillstandswächters in eine bestehende Maschine und/oder Anlage ermöglicht.

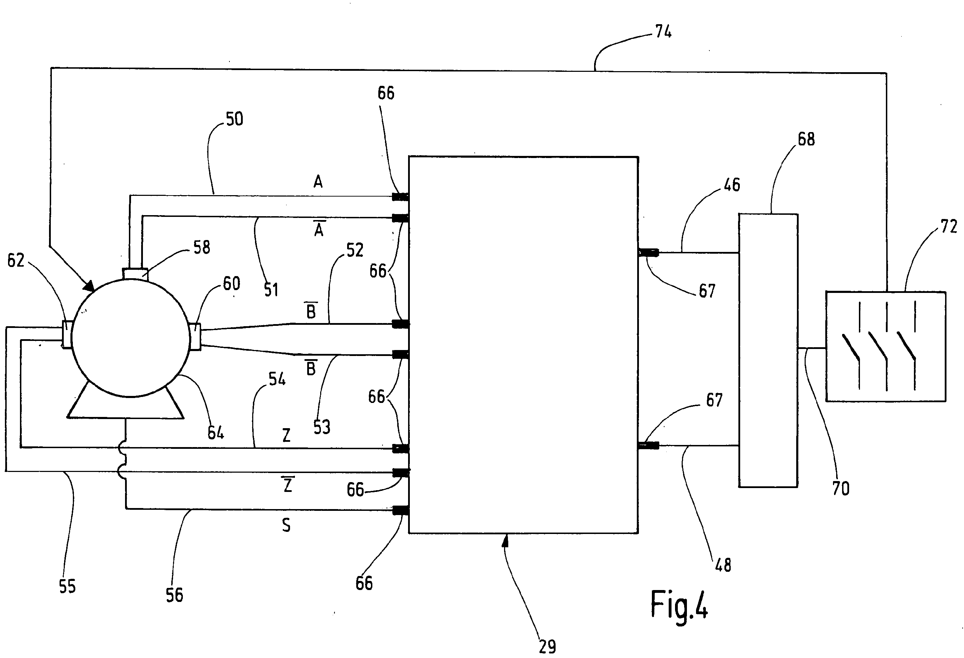

Fig. 4 zeigt die Darstellung einer Anwendung des Überwachungsgerätes aus Fig. 3. Das Gerät 29 ist hier über Signalleitungen 50, 51, 52, 53, 54, 55, 56 mit Gebern 58, 60, 62 verbunden. Die Geber 58, 60, 62 sind einem Antrieb 64 zugeordnet, um eine Bewegungsgröße des Antriebs 64, wie etwa eine Drehzahl, Position, Winkellage u.a. zu erfassen. Die Signalleitungen 50 bis 56 sind über Steckkontakte 66 mit dem Überwachungsgerät 29 verbunden. Die Ausgangssignalleitungen 46, 48 sind jeweils mittels eines Steckverbinders 67 aus dem Gerät 29 herausgeführt und mit einer Steuerung 68 verbunden. Die Steuerung 68 ist vorzugsweise eine fehlersichere Steuerung mit mehreren Eingängen zum Anschluss von Not-Aus-Tastern, Schutztüren, Lichtschranken und/oder dem Überwachungsgerät 29. Die Steuerung erzeugt hier über einen Ausgang 70 ein Steuersignal für einen oder mehrere Schütze 72. Der Schütz 72 weist vorzugsweise mehrere in Reihe geschaltete Kontakte auf (hier nicht dargestellt), die zum fehlersicheren Abschalten des Antriebs 64 dienen. Dementsprechend ist der Schütz 72 über eine Leitung 74 mit dem Antrieb 64 verbunden. In weiteren Ausführungsbeispielen können die Steuerung 68 und/oder der Schütz 72 in das Überwachungsgerät 29 integriert sein, d.h. dass die Auswertungsschaltungen 36, 38 des Überwachungsgerät 29 in der Lage sind, ein zweikanaliges Abschaltsignal für einen Antrieb zu erzeugen.

## Patentansprüche

1. Überwachungsgerät zum fehlersicheren Überwachen einer Bewegungsgröße eines beweglichen Maschinenteils, insbesondere einer Drehzahl, mit einer ersten Sicherheitsschaltungsanordnung (10) mit
- einem ersten Signaleingang (16) zum Zuführen eines ersten Gebersignals (A), das repräsentativ ist für die zu überwachende Bewegungsgröße,
- einem zweiten Signaleingang (16') zum Zuführen eines zweiten Gebersignals (A̅),
- einem ersten Referenzspannungspfad (20) zum Zuführen einer ersten Referenzspannung (UrefA),
- einem zweiten Referenzspannungspfad (20') zum Zuführen einer zweiten Referenzspannung (UrefA̅),
- einem ersten Abgriff (M), der mit dem ersten Signaleingang (16) und dem ersten Referenzspannungspfad (20) verbunden ist, um ein erstes Überlagerungssignal durch Überlagerung des ersten Gebersignals (A) mit der ersten Referenzspannung (UrefA) bereitzustellen,
- einem zweiten Abgriff (M̅), an dem die zweite Referenzspannung (UrefA̅) dem zweiten Gebersignal (A̅) überlagert ist,
- einer ersten Messeinrichtung (22), die mit dem ersten Abgriff (M) verbunden und dazu ausgebildet ist, zu bestimmen, ob das erste Überlagerungssignal wenigstens einen vordefinierten Signalpegel erreicht oder innerhalb eines vordefinierten Signalpegelbereichs liegt, und
- einer zweiten Messeinrichtung (22'), die mit dem zweiten Abgriff (M̅) verbunden und dazu ausgebildet ist, zu bestimmen, ob das zweite Überlagerungssignal wenigstens einen vordefinierten Signalpegel erreicht oder innerhalb eines vordefinierten Signalpegelbereichs liegt,
**gekennzeichnet durch** einen Differenzverstärker (28) mit einem ersten Eingang (26), der mit dem ersten Abgriff (M) verbunden ist, einem weiteren Eingang (32), der mit dem zweiten Abgriff (M̅) verbunden ist, und einer Ausgangssignalleitung (30), und ferner **gekennzeichnet durch** eine Auswerteeinheit (36, 38) zum Bestimmen der Bewegungsgröße in Abhängigkeit von dem ersten Gebersignal (A), wobei die Auswerteeinheit (36, 38) an die Ausgangssignalleitung (30) des Differenzverstärkers (28) angeschlossen ist, und wobei die Auswerteeinheit (36, 38) ferner dazu ausgebildet ist, die erste Referenzspannung (UrefA) und die zweite Referenzspannung (UrefA̅) getrennt voneinander einzustellen.

2. Sicherheitsschaltungsanordnung nach Anspruch 1, wobei das erste und zweite Gebersignal (A, A̅) jeweils einen Wechselsignalanteil (17) aufweisen, und wobei die erste Referenzspannung (UrefA) und die zweite Referenzspannung (UrefA̅) so eingestellt sind, dass sich die Wechselanteile des ersten und zweiten Überlagerungssignals überschneiden.

3. Sicherheitsschaltungsanordnung nach Anspruch 1 oder 2, wobei der vordefinierte Signalpegel oder Signalpegelbereich durch einen oberen Schwellenwert und einen unteren Schwellenwert definiert ist.

4. Sicherheitsschaltungsanordnung nach Anspruch 3, wobei die Messeinrichtungen (22, 22') jeweils dazu ausgebildet sind, ein Fehlersignal zu generieren, wenn der obere und der untere Schwellenwert nicht wechselweise erreicht werden.

5. Sicherheitsschaltungsanordnung nach einem der Ansprüche 1 bis 4, wobei die Messeinrichtungen (22, 22') Analogkomparator aufweisen.

6. Sicherheitsschaltungsanordnung nach einem der Ansprüche 1 bis 5, wobei die Messeinrichtungen (22, 22') Analog-Digital-Wandler aufweisen, um Pegelwerte der Überlagerungssignale zu bestimmen.

7. Sicherheitsschaltungsanordnung nach einem der Ansprüche 1 bis 6, wobei die Auswerteeinheit (36, 38) ferner dazu ausgebildet ist, die Referenzspannung (UrefA) und/oder den vordefinierten Signalpegel oder Signalpegelbereich automatisch einzustellen, und zwar vorzugsweise in Abhängigkeit von Pegelwerten der Gebersignale.

8. Sicherheitsschaltungsanordnung nach einem der Ansprüche 1 bis 7, mit einer weiteren Sicherheitsschaltungsanordnung (10") mit einem weiteren ersten Referenzspannungspfad (20) zum Zuführen einer weiteren ersten Referenzspannung (UrefA), mit einem weiteren zweiten Referenzspannungspfad (20') zum Zuführen einer weiteren zweiten Referenzspannung (Uref A̅), mit einer weiteren ersten und zweiten Messeinrichtung (22, 22'), und mit einem weiteren Differenzverstärker, dem ein weiteres erstes und zweites Gebersignal (B, B̅) zuführbar ist, wobei die Auswerteeinheit (36, 38) ferner mit einem Ausgang des weiteren Differenzverstärkers verbunden ist und eine Quadraturauswertung aufweist.

9. Überwachungsgerät nach einem der Ansprüche 1 bis 8, wobei die erste Referenzspannung (UrefA) und/oder die zweite Referenzspannung (Uref A̅) eine Gleichspannung ist.

10. Überwachungsgerät nach einem der Ansprüche 1 bis 9, wobei die Auswerteeinheit (36, 38) zwei redundante Kanäle aufweist, die jeweils mit dem Ausgang (30) des Differenzverstärkers (28) verbunden sind.

## Claims

1. A monitoring device for failsafely monitoring a movement variable of a moving machine part, in particular a rotational speed, comprising a first safety circuit arrangement (10) having
- a first signal input (16) for supplying a first encoder signal (A) which is representative of the movement variable to be monitored,
- a second signal input (16') for supplying a second encoder signal (*A̅*)
- a first reference voltage path (20) for supplying a first reference voltage (UrefA),
- a second reference voltage path (20') for supplying a second reference voltage (Uref *A̅*),
- a first tap (M) which is connected to the first signal input (16) and to the first reference voltage path (20) in order to provide a first superposition signal by superposing the first reference voltage (UrefA) on the first encoder signal (A),
- a second tap *(M̅*), at which the second reference voltage (Uref *A̅*) is superposed on the second encoder signal (*A̅*),
- a first measuring unit (22) which is connected to the first tap (M) and is designed to determine whether the first superposition signal reaches at least one predefined signal level or is within a predefined signal level range, and
- a second measuring unit (22') which is connected to the second tap (*M̅*) and is designed to determine whether the second superposition signal reaches at least one predefined signal level or is within a predefined signal level range,
**characterized by** a differential amplifier (28) having a first input (26) connected to the tap (M), having a further input (32) connected to the second tap (*M̅*), and having an output signal line (30), and further being **characterized by** an evaluation unit (36, 38) for determining the movement variable on the basis of the encoder signal (A), wherein the evaluation unit (36, 38) is connected to the output signal line (30) of the differential amplifier (28), and wherein the evaluation unit (36, 38) is further designed to adjust the first reference voltage (UrefA) and the second reference voltage (Uref *A̅*) separately from each other.

2. The safety circuit arrangement of claim 1, wherein the first and the second encoder signals (A, *A̅*) each comprises an AC signal component (17), and wherein the first reference voltage (UrefA) and the second reference voltage (Uref *A̅*) are adjusted in such a manner that the AC signal components of the first and second superposition signals coincide.

3. The safety circuit arrangement of claim 1 or 2, wherein the predefined signal level or the signal level range is defined by an upper threshold value and a lower threshold value.

4. The safety circuit arrangement of claim 3, wherein the measuring units (22, 22') each are designed to generate an error signal when the upper and lower threshold values are not reached alternately.

5. The safety circuit arrangement of one of claims 1 to 4, wherein the measuring units (22, 22') each comprise an analog comparator.

6. The safety circuit arrangement of one of claims 1 to 5, wherein the measuring units (22, 22') each comprise analog/digital-converters in order to determine level values of the superposition signals.

7. The safety circuit arrangement of one of claims 1 to 6, wherein the control unit (36, 38) is further designed to automatically adjust the reference voltage (UrefA) and/or the predefined signal level or signal level range, preferably on the basis of level values of the encoder signals.

8. The safety circuit arrangement of one of claims 1 to 7, further comprising a further safety circuit arrangement (10") having a further first reference voltage path (20) for supplying a further first reference voltage (UrefA), having a further second reference voltage path (20') for supplying a further second reference voltage (Uref *A̅*), having a further first and second measuring unit (22, 22'), and having a further differential amplifier which can be supplied with a further first and second encoder signal (B, *B̅*), wherein the evaluation unit (36, 38) is further connected to an output of the further differential amplifier and has a quadrature evaluation section.

9. The monitoring device of one of claims 1 to 8, wherein the first reference voltage (UrefA) and/or the second reference voltage (Uref *A̅*) is a DC voltage.

10. The monitoring device of one of claims 1 to 9, wherein the evaluation unit (36, 38) comprises two redundant channels, which are respectively connected to the output (30) of the differential amplifier (28).

## Revendications

1. Appareil de surveillance destiné à la surveillance avec sécurité intégrée d'une grandeur de mouvement d'une partie de machine mobile, notamment d'une vitesse de rotation, comprenant un premier arrangement de circuit de sécurité (10) qui comporte
- une première entrée de signal (16) destinée à l'acheminement d'un premier signal de transmetteur (A) qui est représentatif de la grandeur de mouvement à surveiller,
- une deuxième entrée de signal (16') destinée à l'acheminement d'un deuxième signal de transmetteur (*A̅*),
- un premier trajet de tension de référence (20) destiné à l'acheminement d'une première tension de référence (UrefA),
- un deuxième trajet de tension de référence (20') destiné à l'acheminement d'une deuxième tension de référence (Uref*A̅*),
- une première prise (M), qui est reliée à la première entrée de signal (16) et au premier trajet de tension de référence (20) afin de mettre à disposition un premier signal de superposition en superposant le premier signal de transmetteur (A) à la première tension de référence (UrefA),
- une deuxième prise (*M̅*), au niveau de laquelle la deuxième tension de référence (Uref*A̅*) est superposée au deuxième signal de transmetteur (*A̅*),
- un premier dispositif de mesure (22) qui est relié à la première prise (M) et qui est configuré pour déterminer si le premier signal de superposition atteint au moins un niveau de signal prédéfini ou se trouve à l'intérieur d'une plage de niveaux de signal prédéfinie, et
- un deuxième dispositif de mesure (22') qui est relié à la deuxième prise (*M̅*) et qui est configuré pour déterminer si le deuxième signal de superposition atteint au moins un niveau de signal prédéfini ou se trouve à l'intérieur d'une plage de niveaux de signal prédéfinie,
**caractérisé par** un amplificateur différentiel (28) comprenant une première entrée (26) à laquelle et reliée la première prise (M), une entrée supplémentaire (32) qui est reliée à la deuxième prise (*M̅*) et une ligne de signal de sortie (30), et en outre **caractérisé par** une unité d'interprétation (36, 38) destinée à déterminer la grandeur de mouvement en fonction du premier signal de transmetteur (A), l'unité d'interprétation (36, 38) étant raccordée à la ligne de signal de sortie (30) de l'amplificateur différentiel (28) et l'unité d'interprétation (36, 38) étant en outre configurée pour régler la première tension de référence (UrefA) et la deuxième tension de référence (Uref*A̅*) séparément l'une de l'autre.

2. Arrangement de circuit de sécurité selon la revendication 1, les premier et deuxième signaux de transmetteur (A, *A̅*) possédant respectivement une part de signal alternatif (17), et la première tension de référence (UrefA) et la deuxième tension de référence (Uref*A̅*) étant réglées de telle sorte que les parts de signal alternatif du premier et du deuxième signal de superposition se chevauchent.

3. Arrangement de circuit de sécurité selon la revendication 1 ou 2, le niveau de signal prédéfini ou la plage de niveaux de signal prédéfinie étant définis par une valeur de seuil supérieure et une valeur de seuil inférieure.

4. Arrangement de circuit de sécurité selon la revendication 3, les dispositifs de mesure (22, 22') étant respectivement configurés pour générer un signal de défaut lorsque les valeurs de seuil supérieure et inférieure ne sont pas atteintes en alternance.

5. Arrangement de circuit de sécurité selon l'une des revendications 1 à 4, les dispositifs de mesure (22, 22') possédant un comparateur analogique.

6. Arrangement de circuit de sécurité selon l'une des revendications 1 à 5, les dispositifs de mesure (22, 22') possédant un convertisseur analogique/numérique pour déterminer les valeurs de niveau des signaux de superposition.

7. Arrangement de circuit de sécurité selon l'une des revendications 1 à 6, l'unité d'interprétation (36, 38) étant en outre configurée pour régler la tension de référence (UrefA) et/ou le niveau de signal prédéfini ou la plage de niveaux de signal prédéfinie automatiquement, et ce de préférence en fonction des valeurs de niveau des signaux de transmetteur.

8. Arrangement de circuit de sécurité selon l'une des revendications 1 à 7, comprenant un arrangement de circuit de sécurité supplémentaire (10") pourvu d'un premier trajet de tension de référence supplémentaire (20) destiné à l'acheminement d'une première tension de référence supplémentaire (UrefA), pourvu d'un deuxième trajet de tension de référence supplémentaire (20') destiné à l'acheminement d'une deuxième tension de référence supplémentaire (Uref*A̅*), comprenant un premier et un deuxième dispositif de mesure supplémentaire (22, 22'), et comprenant un amplificateur différentiel supplémentaire auquel peuvent être acheminés des premier et deuxième signaux de transmetteur supplémentaires (B, *B̅*), l'unité d'interprétation (36, 38) étant en outre reliée à une sortie de l'amplificateur différentiel supplémentaire et possédant un interpréteur de quadrature.

9. Appareil de surveillance selon l'une des revendications 1 à 8, la première tension de référence (UrefA) et/ou la deuxième tension de référence (Uref*A̅*) étant des tensions continues.

10. Appareil de surveillance selon l'une des revendications 1 à 9, l'unité d'interprétation (36, 38) possédant deux canaux redondants qui sont respectivement reliés à la sortie (30) de l'amplificateur différentiel (28).
